# EUROPEAN PATENT APPLICATION

(11) **EP 4 290 807 A1**
(43) Date of publication of application: **13.12.2023**
(21) Application number: 23176707.0
(22) Date of filing: 01.06.2023
(51) Int. Cl.: H04L 9/40

(54) **METHOD FOR DEFENDING AGAINST FUZZING ANALYSIS OF A DEVICE**

(30) Priority: 06.06.2022 US 202217805568
(71) Applicant: NXP B.V., 5656 AG Eindhoven (NL)
(72) Inventor: Veshchikov, Nikita, 5656AG Eindhoven (NL); Pape, Lutz, 5656AG Eindhoven (NL); Connor, Jack, 5656AG Eindhoven (NL)
(74) Representative: Krott, Michel

(57) **Abstract**

A method is provided for defending against a fuzzing analysis in a device. The method including: receiving, by the first device, a message from a second device; determining the message type of the message; determining that the message type is different from known message types of a protocol used by the first device; determining that the fuzzing analysis of the protocol is underway; and using the message type of the message to randomly determine an action against the fuzzing analysis. The action is intended to cause an attacker who tries to use fuzzing against a device to spend much more effort to discover a bug that can be exploited, and thus discourage the attacker from continuing the attack.

## Description

### Background

### Field

This disclosure generally relates to electronic circuits and software, and more particularly, to a method for defending against a fuzzing analysis of a device.

### Related Art

There are many protocols that facilitate communication between electronic devices. Example communication protocols include USB, Bluetooth, Wi-Fi, and near field communication (NFC). The protocol in one device interacts with a counterpart in another device to facilitate communications. Application programs also often interact with each other using protocols as well as Application Programming Interfaces (APIs). The protocols and other programs interact using a set of structured messages such as commands and instructions that can be exchanged between two devices or applications to obtain information or access services. An attacker can also try to interact with a device (or a program) using any of the protocols that the device expects. An attacker may try to craft a malicious message that does not exactly follow the rules of a protocol using a technique called fuzzing. Using information gained from a fuzzing analysis, the attacker may try to create a fault or exploit a bug or error in the program code of the attacked device to gain control or access to the device.

Therefore, what is needed is a countermeasure against a fuzzing analysis performed by an attacker on a device.

### Brief Description of the Drawings

The present invention is illustrated by way of example and is not limited by the accompanying figures, in which like references indicate similar elements. Elements in the figures are illustrated for simplicity and clarity and have not necessarily been drawn to scale.
FIG. 1 illustrates a simplified block diagram of a fuzzing attack against a device.
FIG. 2 illustrates a method for detecting and countering a fuzzing analysis in a device in accordance with an embodiment.
FIG. 3 illustrates a method for determining an action to take against a fuzzing analysis in accordance with an embodiment.
FIG. 4 illustrates a data processing system useful for implementing a device in accordance with an embodiment.

### Detailed Description

Generally, there is provided, a mechanism to detect and defend against a fuzzing analysis on a first electronic device or a program operating in the first electronic device. The mechanism may be implemented as a protocol having a secret anti-fuzzing addition. The secret addition of the protocol is not normally supposed to be used by anyone. This secret addition is generated to resemble a real part of a normal protocol, but functions as a "honeypot" or a "trap" to deceive the fuzzing software and lead the attacker on a wrong path to nonexistent bugs. A device being subjected to a fuzzing analysis receives a message from an attacking device. A normal message will be one of a plurality of normal message types for the protocol. The device determines a message type of the message based on the protocol being used by the device. If the message is a known type used by the protocol, then the message is handled normally for the protocol. However, if the message type is not a known type for the protocol, then the message processing follows the secret path and disables the read code paths. An action against the fuzzing analysis is selected among a plurality of possible actions.

Detecting and defending against a fuzzing analysis by an attacker that is underway allows a reaction to the attack that can undermine the efforts of the attacker. For example, steps may be taken to slow down the fuzzing attack or disable some parts of the protocol in the device under attack. Additional checks and countermeasures may be enabled. For example, a server may be alerted of the attack, the device may be rebooted, the device's firmware may be erased, or some other actions may be performed to discourage and slow down the attacker.

In accordance with an embodiment, there is provided, a method for defending against a fuzzing analysis in a first device, the method including: receiving, by the first device, a message from a second device; determining the message type of the message; determining that the message type is different from known message types of a protocol used by the first device; determining that the fuzzing analysis of the protocol is underway; and using the message type of the message to randomly determine an action against the fuzzing analysis. Using the message type of the message to randomly determine an action may further include randomly choosing one or more of raising an alert, rebooting the first device, request input from a user of the first device, send a randomized error message to the second device, or cycle power to portions of the first device. The method represents a solution to the problem of how to provide a countermeasure against a fuzzing analysis performed by an attacker on a device. Determining that the fuzzing analysis of the protocol is underway may further include assigning a probability that the fuzzing analysis is underway. The method may be implemented in a program comprising instructions stored in a non-transient storage medium and executed by a processor in the first device. The method may be capable of being disabled during software development in the first device. The message type of the message may be a request for data. The message may be a malformed request for data. The method may be enabled or disabled using a control bit stored in a memory.

In another embodiment, there is provided, a method for defending against a fuzzing analysis in a first device, the method including: receiving a message from a second device in a communication between the first and second devices, the message having a message type; determining the message type of the message; determining that the message type is different from any known message types of a protocol used by the first device; in response to the different message type, determining that the fuzzing analysis is being performed on the first device by an attacker; selecting one or more of a plurality of actions to use against the fuzzing analysis; and implementing the selected one or more of the plurality of actions against the fuzzing attack. The method represents an solution to the problem of how to provide a countermeasure against a fuzzing analysis performed by an attacker on a device. The method may be implemented in a program comprising instructions stored in a non-transient storage medium and executed by a processor in the first device. The method may be capable of being disabled during software development in the first device. The protocol may include one or more of Wi-Fi, Bluetooth, near field communication (NFC), and ethernet. selecting one or more of a plurality of actions to use against the fuzzing analysis may further include selecting one or more of raising an alert, rebooting the first device, request input from a user of the first device, send a randomized error message to the second device, or cycle power to portions of the first device. Selecting one or more of a plurality of actions to use against the fuzzing analysis may include randomly selecting one or more of the plurality of actions.

In yet another embodiment, there is provided, a computer program including instructions stored in a non-transitory medium, the instructions for defending against a fuzzing analysis in a first device performed by a second device, the instructions comprising: instructions for determining a message type of a message received by the first device that was transmitted by the second device; instructions for determining that the message type is different from any known message types of a protocol used by the first device; instructions for determining that the fuzzing analysis of the protocol is underway in response to the message having the different message type; and instructions for selecting one or more of a plurality of actions to use against the fuzzing analysis. The computer program may be enabled or disabled using a control bit stored in a memory. The instructions for determining the message type of the message may further include using instruction execution circuitry of a processor to decode the new message to determine the message type. The instructions for selecting one or more of a plurality of actions to use against the fuzzing analysis may further include selecting one or more of raising an alert, rebooting the first device, request input from a user of the first device, send a randomized error message to the second device, or cycle power to portions of the first device. The protocol may include one or more of Wi-Fi, Bluetooth, near field communication (NFC), and ethernet. The instructions for selecting one or more of a plurality of actions to use against the fuzzing analysis may include randomly selecting one or more of the plurality of actions.

Attackers can use various techniques to discover bugs in implementations of protocols. For example, they can use source-code analysis (for open-source software) or reverse engineering of the binary code when it is available. However, source-code analysis and binary reverse engineering can be very challenging even with the help of tools. Another technique often used by attackers to find bugs in an implementation is called fuzzing. Main idea behind fuzzing is to send unexpected values to the device. For instance, the fuzzing tool can communicate with the device by following the analyzed protocol normally while introducing some mutations in the communication from time to time. Some common mutations include: random bit flips and random changes in the messages that are being exchanged; random permutations and duplications of parts of a message (swapping some bytes); and random permutations or duplications of messages in a protocol (send the same message twice or send the message number N+1 before the message number N).

Fuzzing does not require a lot of knowledge about the device and the protocol. Fuzzing also does not require knowledge of the design of the hardware or software (source code is not required). That is one of the reasons attackers like to use it, especially against proprietary implementations of protocols.

Fuzzing itself is not an attack, but it is a first step that is often used to discover a bug and possibly a vulnerability, which is later on exploited to mount an attack. Writing code without bugs is also a nearly impossible task. Thus, one countermeasure against such attacks, is to make the discovery of bugs using fuzzing a very challenging task.

In one embodiment, a fuzzing detection mechanism is based on a concept called "honeypot" in information technology (IT) security. In IT security a honeypot is an object (e.g., a server, a service, a file, a printer, a program, etc.) that is not supposed to be used and it's never meant to be used by anyone when a device is being used for its intended purposes. However, the honeypot's use and state are monitored. The idea is that if an attacker tries to interact with the honeypot, the interaction is most likely an unauthorized interaction. Honeypots are used by security researchers to learn about ways attackers analyze and penetrate IT systems (networks, servers). Honeypots are also used as a detection system because they do not raise any false alarms since any interaction with the honeypot is not normal or expected.

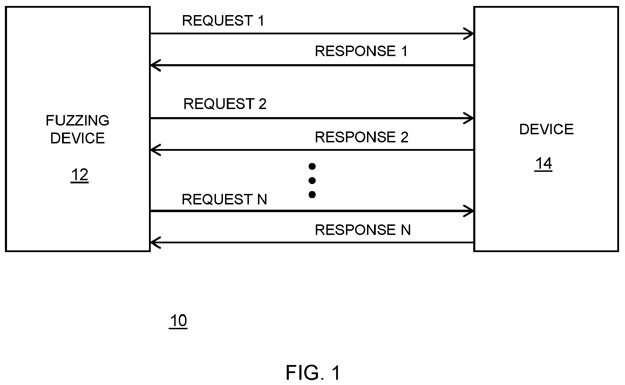

FIG. 1 illustrates a simplified block diagram of a fuzzing attack by fuzzing device 12 against another device 14. For the sake of simplicity, only communication protocols and interactions between two devices will be discussed. However, the same technique can be used for any other types of interactions between two or more entities (e.g., APIs used between 2 programs or inputs submitted by a user to an interface of a device). In the example of FIG. 1, device 12 requests some data and device 14 provides the requested data and/or service. In an embodiment, fuzzing device 12 may be referred to as a fuzzing tester and device 14 may be considered a target under test. In another embodiment, the devices may be portions of software on the same physical device. For example, fuzzing device 12 may be a malicious application that is unknowingly downloaded to a smartphone by the user and device 14 may be a trusted payment code on the smartphone.

Fuzzing is a technique commonly used by program developers to discover bugs or abnormal behaviors in devices and programs. The main idea behind fuzzing is to follow the expected protocol during a communication between the devices while introducing random mutations (modifications) to the exchanged messages. The mutations may include random bit flips in messages, and changes in the order of messages or parts of a message. Normally, a device under legitimate fuzz testing is expected to detect an error in a message sent by the fuzzing device the moment the message with an error is received. When the error is detected, the device under test should notify the message sender of the error in the message. However, if the device does not detect an error in the request message, then it may enter an incoherent state such as deadlock or the device may "crash". Incoherent states that can lead to the crash of the device are often exploited by an attacker. If such problems are not discovered during the device manufacturing, they might be discovered by an attacker.

As an example, assume that there are 4 different types of requests that device 12 can send to device 14: Init_session, Finalize session, Request_A and Request_B. Similarly, assume that device 14 (e.g, a service provider) can respond with 5 types of messages: Init_response, Finalize_response, Response_A, Response_B and Error. The Error message type is sent to device 12, for example, if a problem occurred during the handling of the request or if the request is not correctly formatted.

In the example of FIG. 1, device 12 is a fuzzing device sending many different requests, such as requests for data, and device 14 is undergoing a fuzzing analysis by device 12 and may be, for example, a service provider that sends responses to the requests. For the purposes of clarity and simplicity, FIG. 1 provides an example of two devices using a very simple protocol for communication. Device 12 sends requests labeled REQUEST 1 to REQUEST N and device 14 responds to each request with a corresponding response of responses labeled RESPONSE 1 to RESPONSE N. A similar setup can be done by an attacker to analyze a device that requests services. In addition to the requests and responses, an error message may also be sent to device 12 if a problem occurs during the handling of a request or if a request is not correctly formatted. These types of errors can be found by an attacker who uses a fuzzing technique such as illustrated in FIG. 1 to discover vulnerabilities in a device or program.

Before attacking a device, an attacker needs to know how to craft a malicious message that can be used to exploit a bug in the code. If the source code of the implementation is available to the attacker, the attacker may analyze the source code to find a bug that can be used for an attack. However, the source code of the implementation of many protocols (for a given specific device) is rarely available for commercial products. In such a case the attacker may use fuzzing, or fuzz-testing, to discover bugs in the implementation of the target device. A fuzzing analysis performed by an attacker can be successful even without having details of the implementation such as hardware schematics or the source code. Sometimes even a tested piece of code will have some uncaught errors.

Fuzzing analysis detection using a honeypot can be applied to a variety of different use cases and scenarios. For example, the fuzzing analysis detection as described herein can be applied to most devices that include programs that communicate with other devices such as smartphones, smartcards, card readers, servers, internet of things (IoT) devices, household appliances, automobiles, etc. In terms of ways of communicating, fuzzing analysis detection can be applied to files being used as inputs, messages of a protocol being parsed by a program, a request sent using an API, etc.

In one embodiment, a protocol that is used between devices 12 and 14 is slightly modified to include a honeypot. The modification is done in such way that it does not affect any normal interactions between devices that use the protocol in its intended way. Thus, nothing is removed or modified in the standard protocol messages. However, one or several additional message types (or request types) are added to the protocol. These additional message types should resemble one or several of the existing request messages. The idea is that one of the common techniques is to use random bit flips or even entire byte modifications during the fuzzing detection. This way the attacker would at some point likely find the new message types that were added as a honeypot for detecting fuzzing.

In addition to the extra message types that resemble some of the normal messages from the protocol, a special procedure or software is added that would handle these messages received from the attacker and function as a countermeasure against the attack. This procedure is designed to mislead, hide information from, and waste time of the attacker. For instance, the special procedure may disable the valid requests and just leave the honeypots active, misleading an attacker using fuzzing to believe everything is still in order. Or this procedure could simulate the fact that the device entered some error state to try to trick the attacker (i.e., the fuzzing software) that a bug was found.

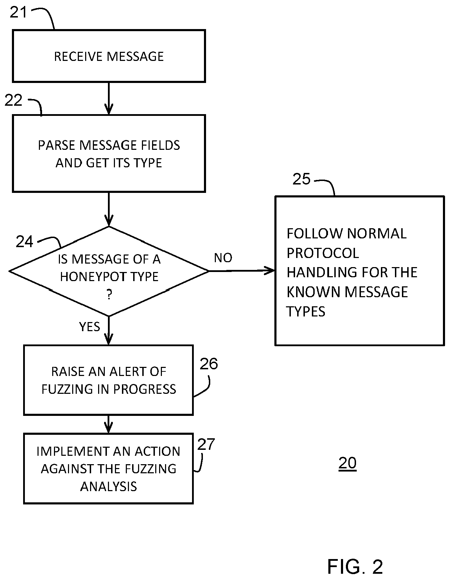

In one embodiment, an extra message type may be added to the implementation of device 14. For example, referring to the example message types above, a Request_C type of message can be added. In one embodiment, the extra message type is not available in the documentation, does not correspond to any service in the system, and should never be used by any legitimate devices that request a service. However, in an implementation of message parsing (recognition) of device 14, the extra message type Request_C will be present and will be used for the detection of a fuzzing analysis. All other types of messages will be recognized and used normally as shown in FIG. 2.

FIG. 2 illustrates method 20 for detecting and countering a fuzzing analysis in a device in accordance with an embodiment. Method 20 begins at step 21. At step 21, a message is received from a device, such as device 12 in FIG. 1. At step 22, the message is parsed in order to determine the type of message. At decision step 24, it is determined if the message is a honeypot message type for the protocol being used in a communication between the devices, such as, e.g., device 12 and device 14. If the message type is determined to be a known message type, the NO path is taken to step 25 and normal protocol handling for the known message type is followed. If the message is a honeypot message type, then the message may indicate a fuzzing analysis underway and the YES path is taken to step 26, where an alert may be raised that a fuzzing analysis is in progress. At step 27, the device, such as device 14 in FIG. 1, may implement an action against the fuzzing analysis.

When adding a new message type to an implementation, parsing of messages as shown in step 22 is often not a problem. In various protocols and APIs message or request types might be encoded as strings (simple text format such as "json"); or the message might be encoded as numbers in binary (in one or several bytes) such as for example 0000 0001 and 0000 0010. In both cases it is possible to add a new message type to the parsing of the message. For example, message type "Request C" for the string encoding or 0000 0110 for the binary encoding in a byte.

In the above-described examples, one special type of message (Request_C) is added to detect fuzzing. But in other embodiments, it is possible to add more of these types of messages to increase the chances of detecting fuzzing more quickly. However, it might require more code to detect these added types of messages. Moreover, in one example the difference between a legitimate request and a message type that doesn't match the protocol can be small, e.g., one letter difference. But in other embodiments, the difference may be larger. It might be useful to add message types with small differences because one of the common strategies of fuzzing includes adding one or more random bit flips to a normal message.

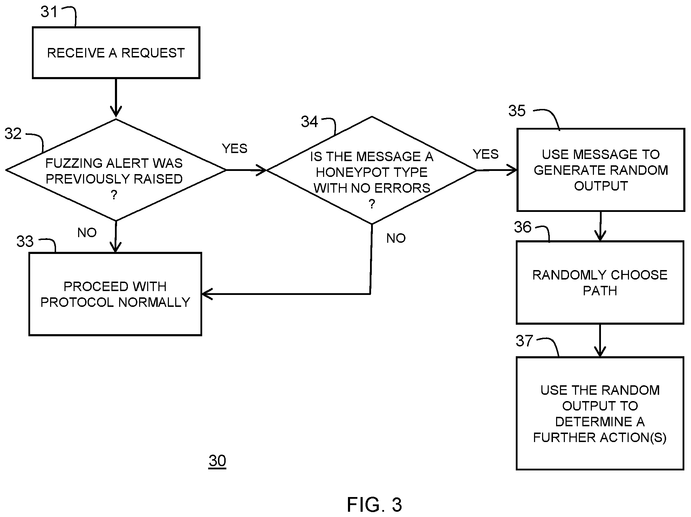

FIG. 3 illustrates method 30 for determining an action to take against a fuzzing analysis in accordance with an embodiment.

Since the Request_C type of message from the above example is not a part of a standard known protocol it will never be intentionally used by a legitimate user (application or device). Thus, if device 14 (FIG. 1) receives such a message, it is likely to be a result of a fuzzing analysis or similar activity done by an attacker.

For method 30 in FIG. 3, assume that the delivered messages are not corrupted and some standard mechanism such as Error Correcting Codes (ECC) is used to ensure that a message received by device 14 is exactly the same as the message sent by device 12. In other words, assume there is no error in the message due to some noise on the transmission channel. If, for some reason, there is a possibility of errors in the received message, then instead of treating every detected unknown message as an ongoing fuzzing analysis, a probability can be assigned to the event. This probability may be related to the probability of having naturally occurring non-malicious (non-intentional) errors in the received messages. However, such a scenario is unlikely in most modern communication protocols and APIs since usually low-level protocols ensure that the delivered message is not corrupted.

Method 30 begins at step 31. At step 31, a message request is received. At decision step 32, it is determined if a fuzzing alert was previously raised. If a fuzzing alert was not previously raised for the received message, the NO path is taken to step 33, and processing of the protocol proceeds normally. If a fuzzing alert was previously raised for the received message, the YES path is taken to decision step 34. At decision step 34, it is determined if the message is a honeypot message type with no errors such as transmission errors that are not correctable. If the message is a known type with no errors, then the NO path is taken to step 33, and processing of the protocol proceeds normally. If the message is a honeypot message type, or the message has errors that were not correctable, the YES path is taken to step 35. At steps 35, 36, and 37, the received message is used to generate a random output, a randomly chosen path, and use the random output to determine further action(s) or countermeasure(s). Using the message type of the message ,e.g., whether the message type is known or unknown, to randomly determine an action may include various actions, for example, randomly choosing one or more of raising an alert, rebooting the first device, request input from a user of the first device, send a randomized error message to device 12, the fuzzing device, or cycle power to portions of the first device.

The fuzzing software by the attacker will generally try to perform maximum code coverage and thus would submit new inputs to the analyzed device or software as long as it gives new outputs (or output types) that the attacker has not seen before. An attacker would try to find as many bugs as possible to maximize their chances of finding one that would lead to a successful attack.

Once it is determined that the device is under a fuzzing analysis, a portion of code is activated that will try to slow down the fuzzing analysis, to waste as much time of the attacker as possible, and to divert the attacker's attention into trying to hunt for bugs and vulnerabilities that do not exist. This can be done using some auto-generated new and/or randomized responses. Thus, if the device that detected that it is under analysis using fuzzing techniques would start sending new (previously unseen) responses then the fuzzing analysis software of the attacker would spend a lot of time on the analysis of these new responses and on bugs that do not really exist. That is, the countermeasure will try to make the attacker think that there are bugs in code locations that do not contain bugs.

Auto-generated error messages may be used to trick the fuzzing system during the attack. Usually, software and devices have a set of common error messages or error response codes. Examples of error messages may include: "Error: unknown request type", "Error: missing parameter", "Error: record not found" and "Unexpected error". To trick the attacker, a new error type may be called, e.g., "Unknown error". Errors often have short explanatory notes such as for example "record 'abed' does not exist" where 'abed' can be some part of an input submitted in the original request from, for example, device 12 to device 14. To trick the attacker, a message may be added that is different for each new or abnormal request that the attacker's fuzzing system submits. For example, a message such as "Unknown error at address '0xabcd'" where abed can be an auto-generated value and may be included in a response provided by device 14. This way the fuzzing software may be refocused on new bugs created in the code by the fuzzing countermeasure and different parts of the code crash each time. In case the attacker submits two identical abnormal inputs it would be better to always respond with the same fake error message or error code. In one embodiment, an error message, or part of an error message may be generated by using a cryptographic hash function (or encryption function) and using the attacker's submitted input as an input to the hash function to produce a result that is the same for the same input and that would be unpredictable and look random. For improved security a small secret value may be added to the input of the hash function so that the result does not only depend on the input from the attacker.

Instead of sending auto-generated error messages the device may react differently while still trying to create delay and cause the attacker to squander his time. For example, the device being analyzed may reboot or turn on or off some of its functionalities, produce sounds or display messages on a screen, if available. In addition to randomizing the error message it is possible to randomize the error code and even sometimes respond with errors to normal requests of the attacker.

Programmers also use fuzzing to test their products for legitimate reasons without trying to hack them. It is usually done by the team responsible for the development of the product. Thus, in some implementations of the fuzzing countermeasure, the honeypot feature for fuzzing detection can either be disabled or taken into account and avoided during normal fuzzing. Alternatively, the fuzzing countermeasure should only be included in a product at the very last step after all legitimate fuzzing tests were performed on the device.

Once the fuzzing analysis is detected, the device under analysis can react to undermine the efforts of the attacker and slow down the fuzzing analysis using the fuzzing countermeasure. For example, some types of queries may be forbidden, or some parts of the protocol may be disabled. Also, additional checks and countermeasures may be enabled. For example, a dedicated countermeasure server or part of a server may be alerted. The device may be rebooted or reset, firmware in the device may be erased, or some other action may be performed that is designed to discourage and slow down the attacker. The device can reset to factory settings. The device can erase its memory. Either some of the device configuration, or the entire firmware or even the cryptographic materials embedded in the device may be erased. The device can send a fake response message instead of following the standard expected protocol. The device can also send a message to a special dedicated server and alert it that one of the devices may be under attack or under investigation by an attacker. The device can also ask the user to perform some additional tasks to prove that the user is legitimate, e.g., the user may be asked to authenticate, solve a CAPTCHA or ask the user to prove that he is not a bot. Such actions that can only be done by humans will seriously slow down any attempt at fuzzing the device. This way an attacker who tries to use fuzzing against a device will have to expend much more effort to discover a bug that can be exploited, and the attacker may be discouraged from continuing the attack.

Instead of taking actions immediately, the device may be set to react to alerts only if a predetermined number of alert raising events occur within a relatively short time frame. This technique can reduce undesirable reactions to false alerts. Note, that the fuzzing detection mechanism, or at least actions taken upon detection should have a mechanism for being disabled because legitimate software developers and testers can use fuzzing during the development phase of a device. One way to disable the fuzzing mechanism may be to assign a bit in a register that can be controlled to enable or disable fuzzing detection. The register may be a secure register or memory location.

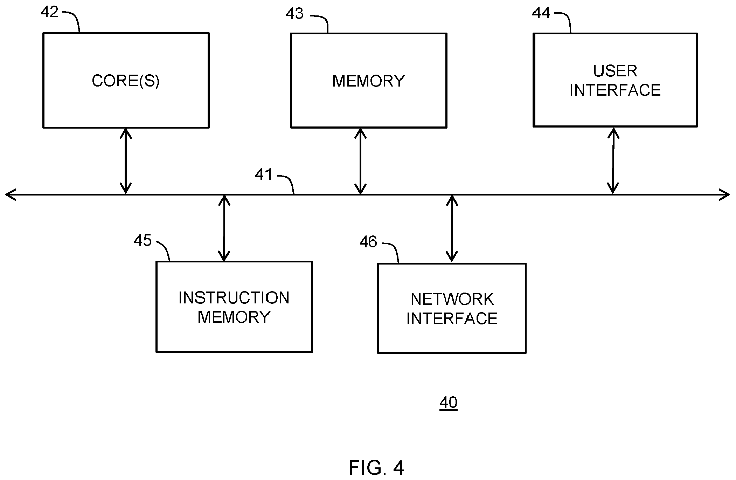

FIG. 4 illustrates data processing system 40 useful for implementing an electronic device, and in particular, device 14 from FIG. 1 in accordance with an embodiment. Data processing system 40 may be implemented using one or more integrated circuits and may be used in an implementation of the described embodiments. Data processing system 40 includes bus or switching network 41. Connected to bus 41 is one or more processor cores 42, memory 43, user interface 44, instruction memory 45, and network interface 46. The one or more processor cores 42 may include any hardware device capable of executing instructions stored in memory 43 or instruction memory 45. For example, processor cores 42 may decode and parse new messages to determine message types using circuitry for decoding and parsing instructions that processor cores 42 uses for normal execution of instructions. Processor cores 42 may be, for example, a microprocessor, field programmable gate array (FPGA), application-specific integrated circuit (ASIC), or similar device. Processor cores 42 may be implemented in a secure hardware element and may be tamper resistant.

Memory 43 may be any kind of memory, such as for example, L1, L2, or L3 cache or system memory. Memory 43 may include volatile memory such as static random-access memory (SRAM) or dynamic RAM (DRAM), or may include non-volatile memory such as flash memory, read only memory (ROM), or other volatile or non-volatile memory. Also, memory 43 may be implemented in a secure hardware element or other type of secure storage. Alternately, memory 43 may be a hard drive implemented externally to data processing system 40 or a register file. In one embodiment, memory 43 may be used to store the fuzzing countermeasure software and a control bit for enabling and disabling the fuzzing countermeasure.

User interface 44 may be connected to one or more devices for enabling communication with a user such as an administrator. For example, user interface 44 may be enabled for coupling to a display, a mouse, a keyboard, or other input/output device. Network interface 46 may include one or more devices for enabling communication with other hardware devices. For example, network interface 46 may include, or be coupled to, a network interface card (NIC) configured to communicate according to the Ethernet protocol. Also, network interface 46 may implement a TCP/IP stack for communication according to the TCP/IP protocols. Various other hardware or configurations for communicating are available.

Instruction memory 45 may include one or more non-transient machine-readable storage media for storing instructions for execution by processor cores 42. In other embodiments, both memories 43 and 45 may store data upon which processor cores 42 may operate, such as the fuzzing analysis countermeasure. Memories 43 and 45 may also store, for example, encryption, decryption, and verification applications. Memories 43 and 45 may be implemented in a secure hardware element and be tamper resistant.

Various embodiments, or portions of the embodiments, may be implemented in hardware or as instructions on a non-transitory machine-readable storage medium including any mechanism for storing information in a form readable by a machine, such as a personal computer, laptop computer, file server, smart phone, or other computing device. The non-transitory machine-readable storage medium may include volatile and non-volatile memories such as read only memory (ROM), random access memory (RAM), magnetic disk storage media, optical storage medium, flash memory, and the like. The non-transitory machine-readable storage medium excludes transitory signals.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements. The term "coupled," as used herein, is not intended to be limited to a direct coupling or a mechanical coupling.

## Claims

1. A method for defending against a fuzzing analysis in a first device, the method comprising:
receiving, by the first device, a message from a second device;
determining the message type of the message;
determining that the message type is different from known message types of a protocol used by the first device;
determining that the fuzzing analysis of the protocol is underway; and
using the message type of the message to randomly determine an action against the fuzzing analysis.

2. The method of claim 1, wherein using the message type of the message to randomly determine an action further comprises randomly choosing one or more of raising an alert, rebooting the first device, request input from a user of the first device, send a randomized error message to the second device, or cycle power to portions of the first device.

3. The method of claim 1 or 2, wherein determining that the fuzzing analysis of the protocol is underway further comprises assigning a probability that the fuzzing analysis is underway.

4. The method of any preceding claim, wherein the method is implemented in a program comprising instructions stored in a non-transient storage medium and executed by a processor in the first device.

5. The method of claim 4, wherein the method is capable of being disabled during software development in the first device.

6. The method of any preceding claim, wherein the message type of the message is a request for data.

7. The method of claim 6, wherein the message is a malformed request for data.

8. The method of any preceding claim, wherein the method is enabled or disabled using a control bit stored in a memory.

9. A method for defending against a fuzzing analysis in a first device, the method comprising:
receiving a message from a second device in a communication between the first and second devices, the message having a message type;
determining the message type of the message;
determining that the message type is different from any known message types of a protocol used by the first device;
in response to the different message type, determining that the fuzzing analysis is being performed on the first device by an attacker;
selecting one or more of a plurality of actions to use against the fuzzing analysis; and
implementing the selected one or more of the plurality of actions against the fuzzing attack.

10. The method of claim 9, wherein the method is implemented in a program comprising instructions stored in a non-transient storage medium and executed by a processor in the first device.

11. The method of claim 9 or 10, wherein the method is capable of being disabled during software development in the first device.

12. The method of any one of claims 9 to 11, wherein the protocol comprises one or more of Wi-Fi, Bluetooth, near field communication (NFC), and ethernet.

13. The method of any one of claims 9 to 12, wherein selecting one or more of a plurality of actions to use against the fuzzing analysis further comprises selecting one or more of raising an alert, rebooting the first device, request input from a user of the first device, send a randomized error message to the second device, or cycle power to portions of the first device.

14. The method of any one of claims 9 to 13, wherein selecting one or more of a plurality of actions to use against the fuzzing analysis comprises randomly selecting one or more of the plurality of actions.

15. A computer program comprising executable instructions stored in a non-transitory medium, the instructions for defending against a fuzzing analysis in a first device performed by a second device, wherein, when executed, the instructions carry out the method of any preceding claim.

## Amended claims

### Amended claims in accordance with Rule 137(2) EPC.

1. A method for defending against a fuzzing analysis in a first device (14), the method comprising:
receiving, by the first device (14), a message from a second device (12);
determining the message type of the message;
determining that the message type is different from known message types of a protocol used by the first device (14);
determining that the fuzzing analysis of the protocol is underway; and
using the message type of the message to randomly determine an action against the fuzzing analysis;
**characterized in that** determining that the message type is different from the known message types includes parsing the message in order to determine that the message type is a honeypot message type for the protocol being used in a communication between the first device (14) and the second device (12).

2. The method of claim 1, wherein the protocol comprises one or more of Wi-Fi, Bluetooth, near field communication, NFC, and ethernet.

3. The method of claim 1 or 2, wherein using the message type of the message to randomly determine an action further comprises randomly choosing one or more of raising an alert, rebooting the first device (14), request input from a user of the first device (14), send a randomized error message to the second device (12), or cycle power to portions of the first device (14).

4. The method of any preceding claim, wherein determining that the fuzzing analysis of the protocol is underway further comprises assigning a probability that the fuzzing analysis is underway.

5. The method of any preceding claim, wherein the method is implemented in a program comprising instructions stored in a non-transient storage medium and executed by a processor in the first device (14).

6. The method of claim 5, wherein the method is capable of being disabled during software development in the first device (14).

7. The method of any preceding claim, wherein the message type of the message is a request for data.

8. The method of claim 7, wherein the message is a malformed request for data.

9. The method of any preceding claim, wherein the method is enabled or disabled using a control bit stored in a memory.

10. A computer program comprising executable instructions stored in a non-transitory medium, the instructions for defending against a fuzzing analysis in a first device (14) performed by a second device (12), wherein, when executed, the instructions carry out the method of any preceding claim.
